# EUROPEAN PATENT APPLICATION

(11) **EP 2 047 944 A1**
(43) Date of publication of application: **15.04.2009**
(21) Application number: 08164696.0
(22) Date of filing: 19.09.2008
(51) Int. Cl.: B23P 6/04

(54) **Method and system for restoring parent metal properties across welds**

(30) Priority: 08.10.2007 US 868610
(71) Applicant: General Electric Company, Schenectady, NY 12345 (US)
(72) Inventor: Bouse, Gregory K., Greer, SC 29650 (US); Cairo, Ronald Ralph, Greer, SC 29650 (US); Crum, Gregory Allan, Mauldin, SC 29662 (US)
(74) Representative: Gray, Thomas

(57) **Abstract**

A method, with an associated system, for providing a cast component comprises annealing heat treatment to reduce casting stresses; initial machining the cast component; initial nondestructive testing (NDT) the machined cast component to identify NDT indications in the cast component; treating and removing NDT indications from the machined cast component; weld upgrading the treated and removed NDT indications from the machined cast component, the weld upgrading providing stress relief; intermediate nondestructive testing the cast component to identify NDT indications in the weld upgraded cast component; normalizing and temper heat treatment of the cast component; second intermediate nondestructive testing the cast component to identify NDT indications in the cast component; further treating and removing NDT indications from the cast component; post-normalization and temper weld upgrading the treated and removed NDT indications providing stress relief; and final nondestructive testing the cast component to identify NDT indications in the cast component.

## Description

### BACKGROUND OF THE INVENTION

The invention relates generally to an upgrade and heat treatment process (or method) and related system. In particular, the invention relates generally to a upgrade and heat treatment process and related system for cast components that may be formed with defects, or NDT indications.

Cast parts, such as, but not limited to, large sand castings (for example, in the range of 5 to 35 tons in the finished machined state) have long-standing problems with manufacturing defects. These defects, include cracks, voids and casting shrinkage that occur during cool-down and hot tearing due to the non-compliant nature of a mold core. For example, sand castings of CrMoV for turbine cases, either gas or steam turbines, have recognized problems with manufacturing defects that can be attributed to a combination of casting shrinkage during cool-down and hot tearing (cracking) due to the non-compliant nature of the mold core.

These cores are typically sand with a binder to provide shear strength for the core during positioning, with a rigid internal framework that provides a structural load path for hoist-facilitated positioning in the mold. This prevailing arrangement, restricts the movement of the solidifying metal leading to shrinkage porosity and crack formation. It has been determined that as many as 130-140 cracks (or more), some up to 12-inches in length, can form in each half of the cast casing, such as those used for gas turbine shells and compressor discharge cases, and cases for steam turbine shells.

Currently, efforts to mitigate and eliminate the defects, including the cracks evident in these cast parts, may reduce the number of cracks, however, the steps required result in an undesirable reduction in mechanical and physical properties.

One process to eliminate cracks in cast articles is a process that comprises inspecting a casing that may have undergone normalization and temper heat treatment(s) to identify cracks. The discovered cracks are then removed, for example, by being excavated, such as, but not limited to, using torches and grinding equipment. The excavations are filled with weld metal, stress relieved, and the tops of the welds are blended to match the casing. The welds are re-inspected, to confirm that all detectable flaws are removed from the case. The above steps are repeated as often as necessary to eliminate cracks. It may take at least 3 or 4 of these cycles to completely remove all indications of cracking, because the initial casting has a rough surface, where an inspection can be compromised. As is readily evident, this process is undesirably labor, time and energy intensive.

Also, as welding and blending, as described above, progress, the casing surfaces become smoother, and also smaller flaws (around about 1/8 inch long) may get detected. Sometimes, small defects are found inside previously welded areas. Thus, as the inspection process proceeds, small cracks may be discovered in locations not found previously.

In another process to eliminate cracks in cast articles, the weld material is applied after the normalization and temper heat treatment(s). With such a process, a formed weld heat affected zone (HAZ) in the casting has been determined to reduce Low Cycle Fatigue (LCF) life by almost 90% (common terminology is to say LCF is reduced by a factor of 10). This reduction is of course, undesirable.

It would therefore be desirable to provide an upgrade and heat treatment process and related system that overcomes the above-noted deficiencies. Further, it would be desirable to provide an upgrade and heat treatment process and related system that is labor, time and energy efficient and results in a defect free casting without adversely affecting resulting cast article properties.

### BRIEF DESCRIPTION OF THE INVENTION

Briefly, in accordance with one aspect of the invention, a method for providing a cast component comprises initial annealing heat treatment, which may or may not include a normalization and temper heat treatment, to reduce casting stresses and then remove casting risers and gates followed by initial or rough machining the cast component; initial nondestructive testing (NDT) the machined cast component to identify NDT indications in the cast component; treating and removing NDT indications from the machined cast component; weld upgrading the treated and removed NDT indications from the machined cast component, the weld upgrading also including a stress relief; intermediate nondestructive testing the cast component to identify and upgrade (or "repair" or "clear") NDT indications in the weld upgraded cast component; normalizing and temper heat treatment of the cast component (also known as the Quality Heat Treatment); a potential second rough machining of the component, a second intermediate nondestructive testing the cast component to identify NDT indications (which are now usually much smaller and fewer in number than during rough inspection) in the cast component; further treating and removing NDT indications from the cast component; providing stress relief; and final nondestructive testing the cast component to "clear" all NDT indications in the cast component.

In another aspect of the invention, a system for providing a cast component comprise means for annealing and/or normalization and temper heat treatments to reduce casting stresses; means for removal of gates and risers, means for initial machining the cast component; means for initial nondestructive testing (NDT) the machined cast component to identify NDT indications in the cast component; means for treating and removing NDT indications from the machined cast component; means for weld upgrading the treated and removed NDT indications from the machined cast component, means for providing stress relief; means for intermediate nondestructive testing the cast component to identify NDT indications in the weld upgraded cast component; means for normalizing and temper heat treatment of the cast component (the Quality Heat Treatment); means for second intermediate nondestructive testing the cast component to identify NDT indications in the cast component; means for further treating and removing NDT indications from the cast component; means for weld upgrading the treated and removed NDT indications, providing stress relief; and means for final nondestructive testing the cast component to "clear" NDT indications in the cast component.

### BRIEF DESCRIPTION OF THE DRAWINGS

There follows a detailed description of embodiments of the invention, by way of example only and with reference to the accompanying drawings in which:

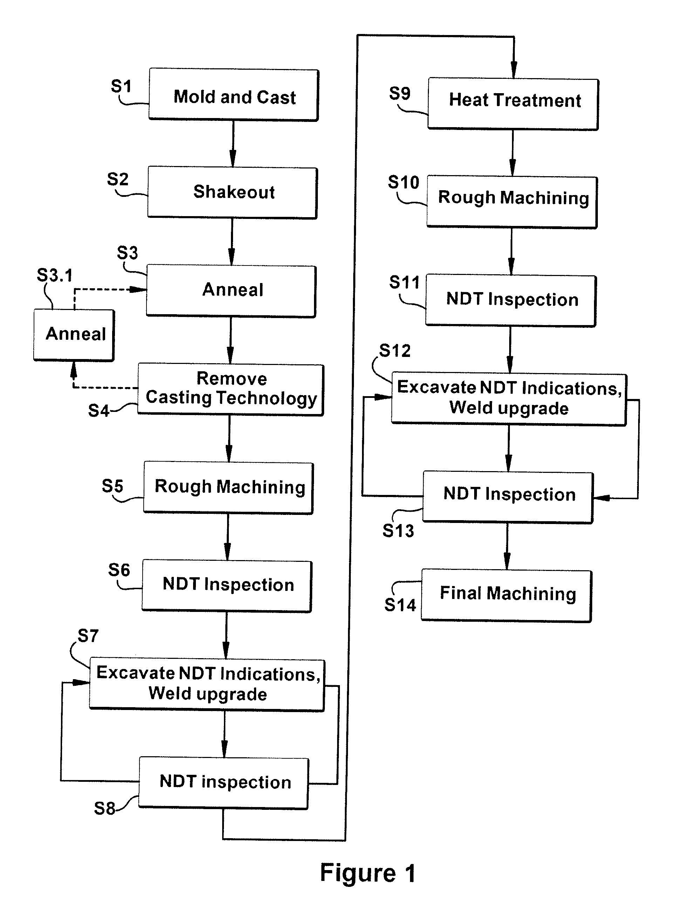

FIGURE 1 is a flow chart of the process, as embodied by the invention.

### DETAILED DESCRIPTION OF THE INVENTION

An aspect of the invention, for example but in no way limiting of the invention, is to provide a production weld process, and related system, capable of producing large, substantially NDT indication-free, cast case components, such as but not limited to, CrMoV cast components. The cast components can be sand cast components, which have known problems with manufactured areas that can be indicated by detected by nondestructive testing (NDT). These areas that can be indicated by NDT are generally areas less than 1/8^{th} of an inch in size, and can include items referred to as imperfections, blemishes, faults, flaws, shortcomings, defects and the like (hereinafter "NDT indications"). These NDT indications can be due to casting shrinkage during cool-down and hot tearing (cracking) due to the non-compliant nature of the mold core. As recognized, these cores are typically sand with a binder to provide shear strength for the core during positioning, with a rigid internal framework that provides a structural load path for hoist-facilitated positioning in the mold. This arrangement restricts the movement of the solidifying metal leading to shrinkage porosity and crack formation. It has been determined that as many as about 130+ cracks, some up to 12-inches in length, can form in each half of the cast casing, such as those used for gas turbine shells and compressor discharge cases.

These welds, as embodied by the invention, are intended for cast components and preferably have near-parent base metal low cycle fatigue (LCF) life. This process capability can be achieved by substantial elimination of the weld heat affected zones (HAZ) during the normalization and temper (N&T) heat treatment after welding.

An embodiment of the invention comprises a process sequence for post-cast processing, from conventional processing, together with a system having means for providing the process, for restoring parent metal across welds. Some may refer to the processing, as embodied by the invention, as repairing however, there may not be any features that require repair, as it is not broken. In essence, the processing, as embodied by the invention, is upgrading or restoring the parent metal. This processing/sequence change enables the production of large, essentially NDT indication free castings, for example but in no way limiting of the invention, CrMoV steel castings. In this context, in such critical areas, defect free means that NDT indications that are less than about 1/8 inch (3mm). In non-critical areas, defect free means NDT indications that are less than about 1/4 inch (6mm). Life-limiting zones would usually be inside the critical zones.

With reference to Figure 1, the process, as embodied by the invention, comprises a series of steps. In Step S1, a component, such as a turbine component, is cast. The turbine component can comprise a turbine shell, transition piece, hot gas path part, or any other structural element of a turbine, pump, or other large machine. The above component listing is merely exemplary and is non-limiiting of various turbine components included in the scope of the invention.

Once the turbine component is cast, a shakeout occurs in Step S2. The shakeout comprises, but is not limited to, removing the cast component from the mold. The shakeout of Step S2 may include cleaning and initial visual inspection of the cast component.

In Step S3, a high temperature annealing cycle is applied to the cast component. The high temperature annealing cycle of Step S3 is conducted at a temperature of at approximately 965°C or higher for several hours, followed by a furnace cool. An optional temper cycle, at Step S3.1 (illustrated in Figure 1 by dashed lines) may be applied to the cast component, if required for better weldability. The anneal cycle is intended to reduce and possibly remove residual stress from the cast component. Thus, the cast component can have any casting technology, such as, but not limited to, gating, risering, and tear brackets removed (for example, and in no way limiting of the invention typically with welding torches), in Step S4. The anneal of Step S3 can allow the removal set forth in Step S4 conducted with minimal risk of producing more cracking in the cast component.

After another cleaning, a machining or rough machining step is applied to the cast component in Step S5. The machining of Step S5 prepares many surfaces of the cast component for subsequent nondestructive testing (NDT), which will occur in subsequent steps. For example, but not limited to, the machining at Step S5 can begin to produce the desired shape of the cast component, including the inner bore and flanges (including forward, aft, and centerline flanges).

In Step S6, nondestructive testing (NDT) is performed on the cast component. The nondestructive testing can comprise any adequate and appropriate NDT, such as but not limited to, at least one of, radiography testing (RT), ultrasonic testing (UT), visual testing (VT), and magnetic particle testing (MT). The NDT is intended to identify NDT indications, such as but not limited to, shrinkage porosity, nonmetallic inclusions, and cracks.

Once the NDT indications are identified by NDT at Step S6, the NDT indications will be removed from the cast component. The removal of the NDT indications from the cast component in Step S7 comprises excavation of the NDT indications, followed by intermediate NDT in Step S8 at the site of the removed NDT indications. In an exemplary excavation, but in no way limiting of the invention, the excavation of Step S7 can comprise excavating using torches and grinding equipment. Subsequent to the excavation, and NDT, the welding in Step S7 comprises, but is not limited to, filling the excavations with weld metal (preferably a weld material or metal compatible with the cast component material), heating/welding the weld material so it flows into the excavated NDT indications, and then stress relieving the welded metal. Following the welding step S7 is a stress relief operation to reduce and remove possible adverse effects of the excavation process and welding-on the cast component.

Following Step S7, an intermediate NDT step is performed at Step S8. The nondestructive testing of Step S8 can comprise any adequate and appropriate NDT, such as but not limited to, at least one of, RT, VT, UT, or MT, as in Step S6. This intermediate NDT at Step S8 is intended to identify NDT indications created/remaining after Step S7, and can be used to initiate a repeat of the treatment and removal of the NDT indications from the cast component in Step S7. Steps S7 and S8 can be repeated, as needed, until a satisfactory reduced level of NDT indications, such as but not limited to no NDT indications, are evident in the cast component.

Step S7, prior to the normalization and temper heat treatment in Step S9, is intended to reduce and remove weld heat affected zones (HAZ), which are created by the weld upgrading in Step S7. The removal of the NDT indications and HAZs in Step 9, by a process of diffusion and stress relaxation can return the weld metal and HAZ's back to parent base metal properties, which will increase the low cycle fatigue (LCF) life of the upgraded areas of the cast component. The process, as embodied by the invention, is intended to provide an entire component with LCF life, almost the same as the original cast component parent base properties. However, it is recognized that some of the NDT indications may not be found, or that some of those that were upgraded may subsequently crack following the heat treatments at Step S9. From experience, about 10% of the welds may require upgrade after the heat treatments at Step S9. Thus, it is anticipated that about 10% of the upgraded areas will suffer a LCF debit.

When Steps S7 and S8 are performed and the results are such that the process, as embodied by the invention, can continue, the process then comprises a normalization and temper heat treatment step at Step S9. The normalization and temper heat treatment Step S9 can comprise normalization and temper heat treatments. While heat treatments, such as normalization and temper heat treatments, are known, the normalization and temper heat treatment of the process at Step S9 after a weld upgrade step assists in providing the advantages of the process, as embodied by the invention. The heat treatment Step S9 can comprise, but is not limited to, normalization at about 1050°C (but possibly as low as about 950°C) and a temper heat treatment at about 715°C. It is recognized that this step of the process may produce distortion of the component during the normalization heat treatment, so it is recommended that proper support be given to the component to minimize distortion. Alternatively, additional machining stock may be added to accommodate the potential distortion.

The process, as embodied by the invention, next comprises another potential rough machining cycle, at Step S10. The machining at Step S 10 can produce a further refined shape of the cast component. For example, but not limited to, the machining at Step S 10 can produce a desired shape of the cast component, including a more representative inner bore and flanges. If the component has minimal distortion, it is probable this machining step may be unnecessary; recognizing the primary purpose of this step is to reestablish dimensional accuracy of the component, and to produce surfaces whereby a quality NDT inspection (especially including an ultrasonic (UT) inspection) can be conducted.

Next in step S11, a further nondestructive testing (NDT) is performed on the cast component. This nondestructive testing at Step S 11 requires that all welds be blended to the contour of the component, which will allow a better NDT inspection for shrinkage, porosity, inclusions, and cracks in the cast component. The NDT at Step S 11 can comprise any adequate and appropriate NDT, such as but not limited to, at least one of, radiography, magnetic particle inspection, and ultrasonic testing, as discussed above.

If any one of the one of shrinkage porosity, inclusions, or cracks (NDT indications) is discovered in the cast component, the NDT indications can be treated and removed from the cast component. The treatment and removal of the NDT indications from the treated and cast component in Step S12 can comprise excavation of the NDT indications to allowable wall thickness limits, or an optional welding step at the site of the removed NDT indications. This welding step also involves a stress relief operation at about 690°C for several hours (dependent upon the thickness of the casting) to reduce and remove possible adverse effects of the excavation and welding heat affected zone on the cast component.

Following the treatment and removal of the NDT indications from the treated and cast component in Step S12, a subsequent nondestructive testing (NDT) is performed on the cast component. This nondestructive testing at Step S 13 is to discover and identify any unacceptable shrinkage porosity, inclusions, or cracks in the cast component. The NDT at Step S 13 can comprise any adequate and appropriate NDT, such as but not limited to, at least one of, radiography, visual testing, magnetic particle inspection, and ultrasonic testing. Steps S12 and S 13 can be repeated, as needed, to provide a final cast component with acceptable levels of indications. It is recognized that welds made in Step S12 followed by the stress relief, for example stress relief at about 690°C, do not return the area back to parent base metal properties. The weld HAZ's following the stress relief will suffer a LCF debit, thereby producing a component estimated to have about 10% of the weld upgraded areas suffering the LCF debit, instead of with the current process where 100% of the welds suffer the LCF debit. Here, the process, as embodied by the invention, involves weld upgrades that follow the normalization and temper heat treatment.

This process, as embodied by the invention, can be used to process many turbine components, such as but not limited to, turbine shells, compressor discharge cases, inner barrels, valves, elbows, and scroll or pump casings. The turbine components and the process, as embodied by the invention, can be conducted on many material compositions, such as, but not limited to, CrMoV (1-1/4%Cr, ½%Mo, 1/4V% [B50A224B]), including, but not limited to, 2-1/4%Cr - 1%Mo [B50A178H] steel, 10%Cr, 1%Mo, ¼%V [B50A349] steel, or 13%Cr, 4%Ni, 1/2%Mo steel [CA6NM or ASTM A487], in which weld upgrades are known to degrade LCF life.

The process, as embodied by the invention, may provide for LCF life of welds and their HAZ's made before the normalization and temper heat treatments can be restored to greater than about 90% of parent metal properties, for example removing anywhere from about 2 to about 25 times debit at about 371°C (700°F) which occurs if the welds and HAZ's are only made after the normalization and temper heat treatment process. Experience with welding and NDT further indicates that greater than about 90% of the welds can achieve this improvement in LCF, owning to the facts that some of the welds made before the normalization and temper heat treatments will crack after the heat treatments due to improper flaw removal, or improper NDT inspection.

Furthermore, the process, as embodied by the invention, is utilized, LCF life of welds and their HAZ's made before the normalization and temper heat treatments can be restored to greater than about 79% of parent metal properties, removing anywhere from about 1.6 to about 7.7 times debit at about 510°C (950°F) which occurs if the welds and HAZ's are only made after the normalization and temper heat treatment process. Experience with welding and NDT further indicates that greater than about 90% of the welds can achieve this improvement in LCF, owning to the facts that some of the welds made before the normalization and temper heat treatments will crack after the heat treatments due to improper flaw removal, or improper NDT inspection.

Additionally, the process, as embodied by the invention, can provide for certain life-limiting regions on turbine components to be given special attention during detection, excavation, welding and NDT inspection prior to the normalization and temper heat treatments. These special attention areas may not crack after the normalization and temper heat treatments, and thereby increase the LCF life of the component. Moreover, the process, as embodied by the invention, provides for more engineering into the component casting to reduce the incidences of shrink porosity, inclusions, and cracks prior to the normalization and temper heat treatments, which may thereby reduce the number of welds that must be upgraded, thereby reducing the time and cost to produce the component. Experience has shown that if enough analysis of casting design or solidification modeling is applied to the casting process, in the LCF life-limiting regions, that it may be possible to eliminate all welding in the LCF life-limiting areas prior to the normalization and temper heat treatment.

A shorter and perhaps a faster approach to improving the LCF life of the component would be to identify only the life-limiting regions on the cast components, and to only excavate and weld upgrade those areas prior to the Quality Heat Treatment as described in the above two paragraphs. The remaining areas could then be excavated and upgraded after the Quality Heat Treatment.

While only certain features of the invention have been illustrated and described herein, many modifications and changes will occur to those skilled in the art. It is, therefore, to be understood that the appended claims are intended to cover all such modifications and changes as fall within the true spirit of the invention.

For completeness, various aspects of the invention are now set out in the following numbered clauses:
1. A method for providing a cast component, the method comprising:
   annealing heat treatment to reduce casting stresses;
   removal of casting technology;
   initial machining the cast component;
   initial nondestructive testing (NDT) the machined cast component to identify NDT indications in the cast component;
   weld upgrading the NDT indications from the machined cast component, the weld upgrading providing stress relief;
   intermediate nondestructive testing the cast component to identify NDT indications in the weld upgraded cast component;
   normalizing and temper heat treatment of the cast component;
   second intermediate nondestructive testing the cast component to identify NDT indications in the cast component;
   further treating and removing NDT indications from the cast component;
   weld upgrading the further treated and removed NDT indications providing stress relief; and
   final nondestructive testing the cast component to identify NDT indications in the cast component.
2. A method according to clause 1, wherein the initial machining prepares surfaces of the cast component for nondestructive testing.
3. A method according to clause 1, wherein at least one of the initial nondestructive testing, intermediate nondestructive testing, second intermediate nondestructive testing, and the final nondestructive testing comprises at least one of radiography, visual, magnetic particle and ultrasonic testing, wherein at least one of the initial nondestructive testing, intermediate nondestructive testing, second intermediate nondestructive testing, and the final nondestructive testing can identify at least one of shrinkage porosity, inclusions, and cracks.
4. A method according to clause 1, wherein weld removing comprises excavating NDT indications.
5. A method according to clause 1, further comprising tempering heat treatment following the annealing heat treatment.
6. A method according to clause 1, wherein weld upgrading comprises at least one of filling NDT indications with weld material, welding the weld material, stress relieving the weld and the component, and blending the weld material to a cast component contour.
7. A method according to clause 1, wherein normalization and temper heat treating comprises normalization in a temperature range between about 950°C and about 1050°C and temper heat treating at about 715°C.
8. A method according to clause 1, further comprising at least one of intermediate rough machining of the cast component and final machining of the cast component.
9. A method according to clause 8, wherein at least one of the machining to a desired shape of the cast component and the final machining of the cast component comprises producing at least one of an inner bore and flanges in the cast component.
10. A method according to clause 1, wherein the removal of casting technology comprises removal of at least one of risers, padding, ingates and tear brackets.
11. A system for providing a cast component, the system comprising:
   means for annealing heat treatment to reduce casting stresses;
   means for initial machining the cast component;
   means for initial nondestructive testing (NDT) the machined cast component to identify NDT indications in the cast component;
   means for treating and removing NDT indications from the machined cast component;
   means for weld upgrading the treated and removed NDT indications from the machined cast component providing stress relief;
   means for intermediate nondestructive testing the cast component to identify NDT indications in the weld upgraded cast component;
   means for normalizing and temper heat treatment of the cast component;
   means for second intermediate nondestructive testing the cast component to identify NDT indications in the cast component;
   means for further treating and removing NDT indications from the cast component;
   means for post-normalization and temper weld upgrading the treated and removed NDT indications providing stress relief; and
   means for final nondestructive testing the cast component to identify NDT indications in the cast component.
12. A system according to clause 11, wherein the means for initial machining prepares the surfaces of the cast component for nondestructive testing.
13. A system according to clause 11, wherein the means for initial nondestructive testing, means for intermediate nondestructive testing, means for second intermediate nondestructive testing, and means for final nondestructive testing comprises means for radiography, visual testing, magnetic particle testing and ultrasonic testing, wherein the means for initial nondestructive testing, means for intermediate nondestructive testing, means for second intermediate nondestructive testing, and means for final nondestructive testing can identify at least one of shrinkage porosity, inclusions, and cracks.
14. A system according to clause 11, wherein at least one of the means for treating and removing NDT indications from the cast component and means for the further treating and removing NDT indications from the cast component comprises means for excavating NDT indications.
15. A system according to clause 14, wherein the means for excavating NDT indications comprises excavating torches and grinding equipment.
16. A system according to clause 11, wherein the means for at least one of the weld upgrading the treated and removed NDT indications and means for post-normalization and temper weld upgrading the treated and removed NDT indications comprises means for filling NDT indications with weld material, means for providing stress relief, and means for blending the weld material to the contour of the cast component.
17. A system according to clause 11, further comprising means for intermediate rough machining for machining to a desired cast component shape.
18. A system according to clause 11, further comprising means for tempering heat treatment following an annealing heat treatment by the means for annealing heat treatment.
19. A system according to clause 11, further comprising means for final machining of the cast component.
20. A system according to clause 19, wherein the means for final machining produces at least one of an inner bore and flanges in the cast component.

## Claims

1. A method for providing a cast component, the method comprising:
annealing (S3) heat treatment to reduce casting stresses;
removal (S4) of casting technology;
initial machining (S5) the cast component;
initial nondestructive testing (NDT) (S6) the machined cast component to identify NDT indications in the cast component;
weld upgrading (S7) the NDT indications from the machined cast component, the weld upgrading providing stress relief;
intermediate nondestructive testing (S8) the cast component to identify NDT indications in the weld upgraded cast component;
normalizing and temper heat treatment (S9) of the cast component;
second intermediate nondestructive testing (S 11) the cast component to identify NDT indications in the cast component;
further treating and removing NDT indications (S12) from the cast component;
weld upgrading (S12) the further treated and removed NDT indications providing stress relief; and
final nondestructive testing (S13) the cast component to identify NDT indications in the cast component.

2. A method according to claim 1, wherein the initial machining (S5) prepares surfaces of the cast component for nondestructive testing (S6).

3. A method according to claim 1 or 2, wherein at least one of the initial nondestructive testing (S6), intermediate nondestructive testing (S8), second intermediate nondestructive testing (S11), and the final nondestructive testing (S13) comprises at least one of radiography, visual, magnetic particle and ultrasonic testing, wherein at least one of the initial nondestructive testing, intermediate nondestructive testing, second intermediate nondestructive testing, and the final nondestructive testing can identify at least one of shrinkage porosity, inclusions, and cracks.

4. A method according to any of the preceding claims, wherein weld removing comprises excavating NDT indications.

5. A method according to any of the preceding claims, further comprising tempering heat treatment following the annealing heat treatment.

6. A method according to any of the preceding claims, wherein weld upgrading (S7, S12) comprises at least one of filling NDT indications with weld material, welding the weld material, stress relieving the weld and the component, and blending the weld material to a cast component contour.

7. A method according to any of the preceding claims, wherein normalization and temper heat treating comprises normalization in a temperature range between about 950°C and about 1050°C and temper heat treating at about 715°C.

8. A method according to any of the preceding claims, further comprising at least one of intermediate rough machining (S10) of the cast component and final machining (S 14) of the cast component.

9. A method according to claim 8, wherein at least one of the machining to a desired shape of the cast component and the final machining of the cast component comprises producing at least one of an inner bore and flanges in the cast component.

10. A method according to any of the preceding claims, wherein the removal of casting technology comprises removal of at least one of risers, padding, ingates and tear brackets.

11. A system for providing a cast component, the system comprising:
means for annealing heat treatment (S3) to reduce casting stresses;
means for initial machining (S5) the cast component;
means for initial nondestructive testing (NDT) (S6) the machined cast component to identify NDT indications in the cast component;
means for treating and removing NDT indications from the machined cast component;
means for weld upgrading (S7) the treated and removed NDT indications from the machined cast component providing stress relief;
means for intermediate nondestructive testing (S8) the cast component to identify NDT indications in the weld upgraded cast component;
means for normalizing and temper heat treatment (S9) of the cast component;
means for second intermediate nondestructive testing (S11) the cast component to identify NDT indications in the cast component;
means for further treating and removing NDT indications from the cast component;
means for post-normalization and temper weld upgrading (S12) the treated and
removed NDT indications providing stress relief; and
means for final nondestructive testing (S 13) the cast component to identify NDT indications in the cast component.

12. A system according to claim 11, wherein the means for initial machining (S5) prepares the surfaces of the cast component for nondestructive testing.

13. A system according to claim 11 or 12 wherein the means for initial nondestructive testing (S6), means for intermediate nondestructive testing (S8), means for second intermediate nondestructive testing (S11), and means for final nondestructive testing (S13) comprises means for radiography, visual testing, magnetic particle testing and ultrasonic testing, wherein the means for initial nondestructive testing, means for intermediate nondestructive testing, means for second intermediate nondestructive testing, and means for final nondestructive testing can identify at least one of shrinkage porosity, inclusions, and cracks.

14. A system according to any of claims 11 to 13, wherein at least one of the means for treating and removing NDT indications (S7, S12) from the cast component and means for the further treating and removing NDT indications from the cast component comprises means for excavating NDT indications.

15. A system according to claim 14, wherein the means for excavating NDT indications comprises excavating torches and grinding equipment.
